# EUROPÄISCHE PATENTSCHRIFT

(11) **EP 2 639 476 B1**
(45) Veröffentlichungstag und Bekanntmachung des Hinweises auf die Patenterteilung: **08.04.2015**
(21) Anmeldenummer: 13154251.6
(22) Anmeldetag: 06.02.2013
(51) Int. Cl.: F16F 7/14, F16F 15/06

(54) **Schockdämpfer für die Lagerung eines Gegenstandes in oder an einem Fahrzeug**
Shock absorber for storing an object in or on a vehicle
Amortisseur pour le stockage d'un objet dans ou sur un véhicule

(30) Priorität: 15.03.2012 DE 102012204059
(43) Veröffentlichungstag der Anmeldung: 18.09.2013
(73) Patentinhaber: ThyssenKrupp Marine Systems GmbH, 24143 Kiel (DE)
(72) Erfinder: Paul, Dipl.-Ing. Axel, 24622 Gnutz (DE); Schlägel, Prof. Dr. Matthias, 24601 Wankendorf (DE)
(74) Vertreter: Patentanwälte Vollmann & Hemmer

(56) Entgegenhaltungen:
- EP-A2- 1 138 974
- DE-A1-102009 010 261
- FR-A1- 2 852 371
- US-A- 4 190 227
- US-B1- 6 530 564
- US-B1- 7 303 184

## Beschreibung

Die Erfindung betrifft einen Schockdämpfer für die Lagerung eines Gegenstandes in oder an einem Fahrzeug mit den im Oberbegriff von Anspruch 1 angegebenen Merkmalen.

Es ist allgemein üblich, in militärischen Fahrzeugen untergebrachte Geräte, Vorrichtungen und sogar ganze Abschnitte der Fahrzeugstruktur zum Schutz vor Schockbeanspruchungen schockelastisch zu lagern.

Zu diesem Zweck werden in der Regel Elastomerfederelemente oder Drahtseil-Federelemente als Schockdämpfer eingesetzt. Diese müssen aber zur Dämpfung großer Schocklasten vergleichsweise weich ausgeführt sein. D. h., ihre Federsteifigkeit ist verhältnismäßig gering, was sich wiederum ungünstig auf die Lagereigenschaften unter Normalbedingungen auswirkt, da diese Federelemente auch bei statischer Last zum Einfedern neigen. Die Lagerung von Gegenständen auf solchen Federelementen ist demnach immer in gewisser Weise instabil.

Aus DE 10 2009 010 261 A1 ist ein Schockdämpfer bekannt, der dieses instabile Lagerverhalten unter Normalbedingungen nicht aufweist. Bei diesem Schockdämpfer ist ein lagerungsseitiges Teil, das eine Lagerplattform für einen zu lagernden Gegenstand bildet, zwischen zwei davon an entgegengesetzten Seiten beabstandet angeordneten Fundamentteilen mittels einer Vielzahl von Zugdrähten aus einem Formgedächtnismaterial verspannt. Diese Ausgestaltung hat den Vorteil, dass der Schockdämpfer bei einer unterhalb einer Schockbelastung liegenden Last, eine im Wesentlichen schwingungsfreie Lagerung eines Gegenstandes gewährleistet und erst bei Schocklast in der gewünschten Weise reversibel nachgibt. Als nachteilig erweist sich bei diesem Schockdämpfer allerdings dessen vergleichsweise komplexer Aufbau, der zu einem erheblichen Aufwand bei der Auslegung dieses Schockdämpfers im Hinblick auf unterschiedliche zu realisierende Lagerungsaufgaben und zu einem erheblichen Herstellungsaufwand führt. Als weiterer Nachteil dieses Schockdämpfers ist dessen verhältnismäßig großer Raumbedarf anzusehen, der es oftmals unmöglich macht, den Schockdämpfer in einem Fahrzeug einzusetzen.

In FR 2 852 371 A1 ist ein Schockdämpfer beschrieben, bei dem ein Lagerungsteil über ein zylinderförmig gebogenes und mit mehreren Querschlitzen versehenes, schwingungsdämpfendes Teil aus Formgedächtnismaterial mit einem Fundamentteil verbunden ist.

US 6,530,564 ist ein Schockdämpfer zu entnehmen, bei dem mehrere Drähte aus Formgedächtnismaterial einen sphärisch geformten, schwingungsdämpfenden Teil des Schockdämpfers bilden.

Aus US 7,303,184 B1 ist ein Stauchbügel zur schock- und schwingungsdämpfenden Lagerung von Gegenständen bekannt, bei dem zwischen zwei L-förmigen Bügelteilen mehrere Lagen aus einem Formgedächtnismaterial angeordnet sind.

US 4,190,227 A betrifft einen Schwingungsisolator, bei dem ein Lagerungsteil über mehrere Feder-Dämpfungselemente, welche von ringförmig gebogenen Drähten gebildet werden, mit einem Fundamentteil verbunden ist.

In EP 1 138 974 A2 ist ein weiterer Schwingungsisolator beschrieben, bei dem ein Lagerungsteil über ein Dämpfungselement, welches von einem Drahtseil gebildet wird, mit einem Fundamentteil verbunden ist. Hierbei ist das Drahtseil so durch das Fundamentteil und das Lagerungsteil geführt, dass es außenseitig von Fundamentteil und Lagerungsteil vier asymmetrische Schlaufen bildet.

Vor dem Hintergrund dieses Standes der Technik liegt der Erfindung die Aufgabe zugrunde einen Schockdämpfer für die Lagerung eines Gegenstandes in einem Fahrzeug zu schaffen, der bei einem einfachen und kompakten Aufbau bei einer Schockbelastung eine ausreichende Schockdämpfung gewährleistet, sich aber bei Lasten unterhalb der im Schockfall auftretenden Belastung im Wesentlichen starr verhält.

Gelöst wird diese Aufgabe durch einen Schockdämpfer mit den in Anspruch 1 angegebenen Merkmalen. Vorteilhafte Weiterbildungen dieses Schockdämpfers ergeben sich aus den Unteransprüchen, der nachfolgenden Beschreibung sowie der Zeichnung. Hierbei können die in den Unteransprüchen und der Beschreibung angegebenen Merkmale gemäß der Erfindung jeweils für sich, aber auch in Kombination die erfindungsgemäße Lösung gemäß Anspruch 1 weiter ausgestalten.

Der erfindungsgemäße Schockdämpfer dient zur Lagerung eines Gegenstandes in einem Fahrzeug und insbesondere zur Lagerung eines Gegenstandes in einem Über- oder Unterwasserfahrzeug. Hierbei sind unter einem Gegenstand jede in einem Fahrzeug der oben genannten Art zu lagernden Geräte, Vorrichtungen oder Baugruppen sowie auch ganze Abschnitte der Fahrzeugstruktur zu verstehen. In an sich bekannter Weise weist der Schockdämpfer ein Fundamentteil und ein davon beabstandetes Lagerungsteil auf. Das Fundamentteil dient zur Lagerung des Schockdämpfers an seinem Aufstellort, während das Lagerungsteil zur Lagerung des Gegenstands vorgesehen ist. Fundamentteil und Lagerungsteil sind über mindestens ein schwingungsdämpfendes Teil miteinander verbunden. Das schwingungsdämpfende Teil ist zumindest teilweise, vorzugsweise aber vollständig aus einem Formgedächtnismaterial ausgebildet.

Ein charakteristisches Merkmal des erfindungsgemäßen Schockdämpfers ist dessen Kompaktheit, welche es ermöglicht, den Schockdämpfer auch bei beengten Verhältnissen in einem Fahrzeug einzusetzen. Diese Kompaktheit wird erfindungsgemäß dadurch erreicht, dass sich das schwingungsdämpfende Teil bogenförmig von dem Fundamentteil zu dem Lagerungsteil erstreckt. D. h., das schwingungsdämpfende Teil weist quer zu einer direkten Verbindungslinie zwischen dem Fundamentteil und dem Lagerungsteil eine Krümmung auf. Aufgrund dieser Krümmung wirkt eine auf das Lagerungs- und/oder Fundamentteil wirkende Belastung in dem schwingungsdämpfenden Teil weitestgehend schräg oder quer zu dessen Längsausdehnung. Das schwingungsdämpfende Teil bildet somit ein Biegefederelement. Zweckmößigerweise ist die Anordnung des schwingungsdämpfenden Teils zwischen dem Lagerungsteil und dem Fundamentteil derart, dass das schwingungsdämpfende Teil an seiner konvexen Außenseite kraftbeaufschlagt wird. Bei geeigneter konstruktiver Ausgestaltung und Auslegung und aufgrund seiner Ausbildung aus einem Formgedächtnismaterial verhält sich der schwingungsdämpfende Teil des erfindungsgemäßen Schockdämpfers bei statischer Last, d. h., dann, wenn der Schockdämpfer im Wesentlichen nur von dem Gewicht des aus dem Lagerungsteil gelagerten Gegenstandes belastet wird, starr, während er bei einer Schockbeanspruchung unter Biegung des schwingungsdämpfenden Teils einen Einfederweg bei konstanter Reaktionskraft freigibt.

Der schwingungsdämpfende Teil des erfindungsgemäßen Schockdämpfers weist die Form eines Bügels mit zwei parallel zueinander ausgerichteten Endabschnitten auf. Dementsprechend besitzt der schwingungsdämpfende Teil vorzugsweise einen Bereich, in dem er über einen Winkel von 180° vorzugsweise halbkreisförmig gebogen ist, wobei sich an diesen Bereich zwei Schenkel anschließen, deren von dem gekrümmten Bereich abgewandten Endabschnitte richtungsgleich verlaufen.

So weist der das schwingungsdämpfende Teil bildende Bügel zwei Schenkel auf, deren Abstand voneinander in einem an die beiden parallel zueinander ausgerichteten Endabschnitte angrenzenden Bereich unter Bildung eines Wendepunktes an den Schenkeln stetig abnimmt und die Schenkel in zwei parallel zueinander ausgerichtete Abschnitte übergehen, die durch einen Bogen miteinander verbunden sind. Dementsprechend verlaufen die beiden Schenkel des Bügels ausgehend von dem Lagerungsteil und dem Fundamentteil zunächst im Wesentlichen parallel zueinander, wobei sie anschließend kontinuierlich schräg aufeinander zulaufen und darauf folgend wieder in zwei parallel zueinander ausgerichtete Abschnitte übergehen, die durch einen vorzugsweise halbkreisförmigen Bügelabschnitt miteinander verbunden sind. Dies bedeutet, dass sich ein von dem schwingungsdämpfenden Teil eingeschlossener Bereich in einem von dem Lagerungsteil und dem Fundamentteil abgewandten Bereich verjüngt. Es hat sich gezeigt, dass sich mit dieser Ausgestaltung des schwingungsdämpfenden Teils eine besonders vorteilhafte Kraft-Weg-Charakteristik des erfindungsgemäßen Schockdämpfers erzielen lässt.

Die Verbindung des mindestens einen schwingungsdämpfenden Teils mit dem Lagerungsteil und dem Fundamentteil kann grundsätzlich auf beliebige Weise hergestellt werden. In dieser Hinsicht wird allerdings eine Ausgestaltung bevorzugt, bei der an dem Lagerungsteil und an dem Fundamentteil jeweils eine Ausnehmung ausgebildet ist, wobei ein erster Endabschnitt des schwingungsdämpfenden Teils in die an dem Lagerungsteil ausgebildete Ausnehmung eingreift und ein zweiter Endabschnitt des schwingungsdämpfenden Teils in die an dem Fundamentteil ausgebildete Ausnehmung eingreift. In den Ausnehmungen von Lagerungs- und Fundamentteil werden die beiden Endabschnitte des schwingungsdämpfenden Teils durch geeignete Maßnahmen festgelegt. Beispielsweise können die beiden Endabschnitte des schwingungsdämpfenden Teils im Bereich der Ausnehmungen von Lagerungsund Fundamentteil mit dem Lagerungs- und dem Fundamentteil mittels einer Schweiß- oder Klebverbindung stoffschlüssig verbunden sein. Daneben können auch Formschlussmittel vorgesehen sein, die die beiden Endabschnitte des schwingungsdämpfenden Teils inner- oder außerhalb der Ausnehmungen von Lagerungs- und Fundamentteil formschlüssig festlegen, was den Vorteil hat, dass die Verbindung des schwingungsdämpfenden Teils mit dem Lagerungs- und dem Fundamentteil bei Bedarf gelöst werden kann. Die Ausnehmungen an dem Lagerungsteil und dem Fundamentteil weisen vorzugsweise eine Querschnittskontur auf, die mit den Querschnittskonturen an den Endabschnitten des schwingungsdämpfenden Teils korrespondiert. Weiter bevorzugt sind die Ausnehmungen an dem Lagerungsteil und an dem Fundamentteil an solchen Seiten von Lagerungs- und Fundamentteil angeordnet, die keine Auflagerflächen bilden.

Zwar können das Lagerungsteil und das Fundamentteil bei elementarster Ausgestaltung des erfindungsgemäßen Schockdämpfers lediglich durch ein schwingungsdämpfendes Teil verbunden sein, bevorzugt ist allerdings eine Verbindung des Lagerungsteils mit dem Fundamentteil über mehrere schwingungsdämpfende Teile vorgesehen. Diese schwingungsdämpfenden Teile sind vorzugsweise identisch ausgebildet, können gegebenenfalls aber auch unterschiedliche Ausgestaltungen aufweisen. Die Verwendung mehrerer schwingungsdämpfender Teile ist insbesondere in Verbindung mit der Lagerung schwererer Gegenstände auf dem Schockdämpfer sinnvoll, da sich mit zunehmender Anzahl der schwingungsdämpfenden Teile die Gesamtsteifigkeit des Schockdämpfers erhöhen lässt. Darüber hinaus kann die Verwendung mehrerer schwingungsdämpfender Teile auch eine genauere Auslegung des Schockdämpfers ermöglichen.

Gemäß einer weiteren vorteilhaften Weiterbildung des erfindungsgemäßen Schockdämpfers sind das Lagerungsteil und das Fundamentteil über mehrere in Reihe nebeneinander angeordnete schwingungsdämpfende Teile miteinander verbunden. Hierbei sind die schwingungsdämpfenden Teile an einer gemeinsamen Seite des Lagerungsteils mit dem Lagerungsteil und einer gemeinsamen Seite des Fundamentteils mit dem Fundamentteil verbunden. Vorzugsweise sind benachbarte schwingungsdämpfende Teile mit einem gewissen Abstand voneinander angeordnet. Die Verwendung mehrerer in Reihe nebeneinander angeordneter schwingungsdämpfender Teile ist insofern vorteilhaft, als diese die Steifigkeit des erfindungsgemäßen Schockdämpfers in Richtung quer zu den von den einzelnen schwingungsdämpfenden Teilen aufgespannten Ebenen erhöhen.

Zur Erhöhung der Gesamtsteifigkeit des erfindungsgemäßen Schockdämpfers kann weiter vorteilhaft vorgesehen sein, dass dieser zumindest zwei schwingungsdämpfende Teile aufweist, welche in unterschiedliche Richtungen bogenförmig auskragen. Diese können gegebenenfalls an unterschiedlichen Seiten des Lagerungs- und des Fundamentteils mit dem Lagerungsteil und dem Fundamentteil verbunden sein.

Besonders vorteilhaft ist eine Ausgestaltung des erfindungsgemäßen Schockdämpfers, bei der zumindest zwei schwingungsdämpfende Teile einander im Wesentlichen gegenüberliegend angeordnet sind, wobei sie in entgegengesetzte Richtungen bogenförmig auskragen. D. h., die schwingungsdämpfenden Teile sind bei dieser Ausgestaltung derart angeordnet, dass deren konkav gewölbten Seiten einander zugewandt sind, wobei sowohl das Lagerungsteil als auch das Fundamentteil zwischen diesen schwingungsdämpfenden Teilen angeordnet ist. Bevorzugt weist der Schockdämpfer mehrere in Reihe nebeneinander angeordnete schwingungsdämpfende Teile auf, wobei jedem dieser schwingungsdämpfenden Teile jeweils ein schwingungsdämpfendes Teil in der oben beschriebenen Weise gegenüberliegend angeordnet ist.

Kostengünstig können das zumindest eine schwingungsdämpfende Teil bzw. die schwingungsdämpfenden Teile des erfindungsgemäßen Schockdämpfers aus einem im Handel erhältlichen Halbzeug aus einem Formgedächtnismaterial ausgebildet sein. Besonders herstellungs- und kostengünstig wird das zumindest eine schwingungsdämpfende Teil von einem Draht aus einer Formgedächtnislegierung, vorzugsweise aus einer Nickel-Titan-Legierung gebildet. Hierbei wird zweckmäßigerweise ein Draht mit einer Drahtstärke verwendet, die abgesehen von einer schockartigen Belastung des schwingungsdämpfenden Teils eine im Wesentlichen starre statische Lagerung eines Gegenstandes auf dem Schockdämpfer sicherstellt.

Wie bereits angemerkt worden ist, ist der erfindungsgemäße Schockdämpfer zum Einsatz in einem Fahrzeug vorgesehen. Ein solches Fahrzeug, insbesondere Wasserfahrzeug, welches mindestens einen Schockdämpfer der oben beschriebenen Art aufweist, ist auch Teil der Erfindung. So können beispielsweise in einem Wasserfahrzeug beliebige Gegenstände bzw. Anlagen, aber gegebenenfalls auch Teile der Schiffsstruktur, wie z. B. Decks, mittels eines oder mehrerer Schockdämpfer gemäß der Erfindung gelagert und so vor Schockbeanspruchungen geschützt sein.

Nachfolgend wird die Erfindung anhand eines in der Zeichnung dargestellten Ausführungsbeispiels näher erläutert. In der Zeichnung zeigt:
- Fig. 1: schematisch vereinfacht einen Schockdämpfer in perspektivischer Ansicht und
- Fig. 2: schematisch sehr stark vereinfacht einen auf Schockdämpfern nach Fig. 1 gelagerten Gegenstand in perspektivischer Darstellung.

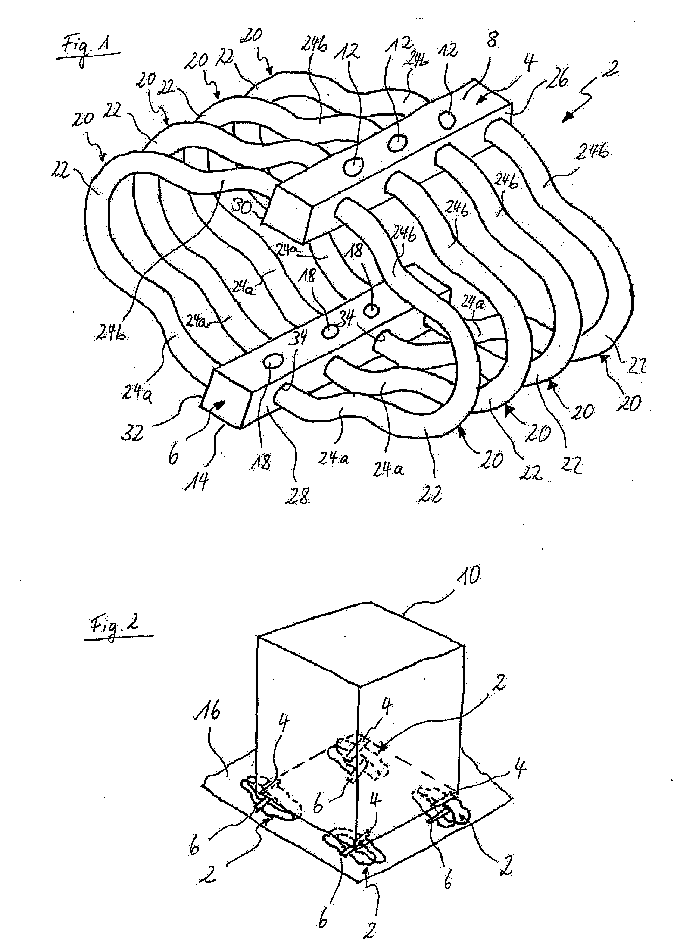

Ein in Fig. 1 dargestellter Schockdämpfer 2 weist ein Lagerungsteil 4 und ein Fundamentteil 6 auf. Sowohl das Lagerungsteil 4 als auch das Fundamtteil 6 werden von einem länglichen Vierkantvollprofilstück aus Stahl gebildet. Das Lagerungsteil 4 ist in einer gemeinsamen Ebene mit dem Fundamentteil 6 beabstandet von dem Fundamentteil 6 angeordnet.

Eine von dem Fundamentteil 6 abgewandte Außenseite 8 des Lagerungsteils 4 dient als Lagerfläche für einen auf dem Schockdämpfer 2 zu lagernden Gegenstand 10. Die Befestigung des Gegenstandes 10 auf dem Lagerungsteil 4 erfolgt mittels einer Schraubverbindung. Zur Aufnahme der hierzu erforderlichen Befestigungsschrauben sind an dem Lagerungsteil 4 drei Bohrungen 12 ausgebildet, die sich ausgehend von der Außenseite 8 des Lagerungsteils 4 durch das Lagerungsteil 4 erstrecken.

Eine von dem Lagerungsteil 4 abgewandte Außenseite 14 des Fundamentteils 6 bildet eine Auflagerfläche des Fundamentteils 6, mit der das Fundamentteil 6 bzw. der gesamte Schockdämpfer 2 auf einem Fundament 16 aufliegt. Das Fundamentteil 6 wird mittels einer Verschraubung an dem Fundament 16 befestigt. Zur Aufnahme der hierfür erforderlichen Befestigungsschrauben sind an dem Fundamentteil 6 drei Bohrungen 18 ausgebildet. Diese erstrecken sich ausgehend von der Außenseite 14 durch das Fundamentteil 6 hindurch.

Das Lagerungsteil 4 und das Fundamentteil 6 sind über acht identische schwingungsdämpfende Teile 20 miteinander verbunden. Die schwingungsdämpfenden Teile 20 werden jeweils von einem Runddraht aus einer Nickel-Titan-Legierung gebildet und sind U-förmig als Bügel ausgebildet. Sie weisen zwei Schenkel 24a und 24b auf, die in einem an das Lagerungsteil 4 und das Fundamentteil 6 angrenzenden Endbereich parallel zueinander ausgerichtete Endabschnitte aufweisen. An den von dem Lagerungsteil 4 und dem Fundamentteil 6 abgewandten Enden der Endabschnitte der Schenkel 24a und 24b nimmt der Abstand der beiden Schenkel 24a und 24b voneinander unter Bildung eines Wendepunktes stetig ab. Daran angrenzend sind die beiden Schenkel 24a und 24b wieder parallel zueinander ausgerichtet und durch einen im Wesentlichen halbkreisförmigen Bogen 22 verbunden.

Vier der schwingungsdämpfenden Teile 20 sind in Reihe nebeneinander an dem Lagerungsteil 4 an einer zu der Außenseite 8 normal ausgerichteten Außenseite 26 mit dem Lagerungsteil 4 verbunden und an dem Fundamentteil 6 an einer zu der Außenseite 14 des Fundamentteils 6 normal ausgerichteten Außenseite 28 mit dem Fundamentteil 6 verbunden. Diesen vier schwingungsdämpfenden Teilen 20 sind vier weitere ebenfalls in Reihe nebeneinander angeordnete schwingungsdämpfende Teile 20 gegenüberliegend angeordnet. Diese schwingungsdämpfenden Teile 20 sind in Reihe nebeneinander an dem Lagerungsteil 4 an einer von der Außenseite 26 abgewandten Außenseite 30 mit dem Lagerungsteil 4 verbunden. Korrespondierend hierzu sind die schwingungsdämpfenden Teile 20 in Reihe nebeneinander an dem Fundamentteil 6 an einer von der Außenseite 28 abgewandten Außenseite 32 mit dem Fundamentteil 6 verbunden.

Zur Verbindung der schwingungsdämpfenden Teile 20 mit dem Lagerungsteil 4 und dem Fundamentteil 6 sind an den Außenseiten 26 und 30 des Lagerungsteils 4 und an den Außenseiten 28 und 32 des Fundamentteils 6 jeweils vier Ausnehmungen in Form von Sacklöchern 34 ausgebildet, in die die schwingungsdämpfenden Teile 20 mit ihren Endabschnitten eingreifen und dort festgelegt sind.

Die Lagerung eines Gegenstandes 10 auf den beschriebenen Schockdämpfern 2 wird aus Fig. 2 deutlich. Dort sind vier Schockdämpfer 2 über ihre Fundamentteile 6 auf einem Fundament 16 befestigt. Korrespondierend zu einer rechteckigen Bodenfläche des schematisch stark vereinfacht dargestellten Gegenstandes 10 sind die Schockdämpfer 2 auf dem Fundament 16 derart angeordnet, dass sie die Eckpunkte eines Rechtecks bilden. Der Gegenstand 10 liegt auf den Lagerungsteilen 4 der Schockdämpfer 2 auf und ist dort befestigt. Die Schockdämpfer 2 sind so ausgelegt, dass sie sich bei statischer Belastung durch das Gewicht des Gegenstandes 10 quasi starr verhalten, den Gegenstand 10 aber bei einer Schockbelastung durch ein Einfedern ihrer schwingungsdämpfenden Teile 20 vor einer Beschädigung schützen.

### Bezugszeichenliste

- 2: Schockdämpfer
- 4: Lagerungsteil
- 6: Fundamentteil
- 8: Außenseite
- 10: Gegenstand
- 12: Bohrung
- 14: Außenseite
- 16: Fundament
- 18: Bohrung
- 20: schwingungsdämpfendes Teil
- 22: Bogen
- 24a, 24b: Schenkel
- 26: Außenseite
- 28: Außenseite
- 30: Außenseite
- 32: Außenseite
- 34: Sackloch

## Patentansprüche

1. Schockdämpfer (2) für die Lagerung eines Gegenstandes (10) in oder an einem Fahrzeug, insbesondere Über- oder Unterwasserfahrzeug, mit mindestens einem Fundamentteil (6) und einem davon beabstandeten Lagerungsteil (4), welches mit dem Fundamentteil (6) über mindestens ein schwingungsdämpfendes Teil (20) verbunden ist, das zumindest teilweise aus einem Formgedächtnismaterial ausgebildet ist und sich bogenförmig von dem Fundamentteil (6) zu dem Lagerungsteil (4) erstreckt, wobei das schwingungsdämpfende Teil (20) die Form eines Bügels mit zwei parallel zueinander ausgerichteten Endabschnitten aufweist, **dadurch gekennzeichnet, dass** der Bügel zwei Schenkel (24a, 24b) aufweist, deren Abstand voneinander in einem an die beiden parallel zueinander ausgerichteten Endabschnitte angrenzenden Bereich unter Bildung eines Wendepunktes an den Schenkeln (24a, 24b) stetig abnimmt, wobei die Schenkel (24a, 24b) in zwei parallel zueinander ausgerichtete Abschnitte übergehen, die durch einen Bogen (22) miteinander verbunden sind.

2. Schockdämpfer (2) nach Anspruch 1, **dadurch gekennzeichnet, dass** an dem Lagerungsteil (4) und an dem Fundamentteil (6) jeweils eine Ausnehmung ausgebildet ist, wobei ein erster Endabschnitt des schwingungsdämpfenden Teils (20) in die an dem Lagerungsteil (4) ausgebildete Ausnehmung eingreift und ein zweiter Endabschnitt des schwingungsdämpfenden Teils (20) in die an dem Fundamentteil (6) ausgebildete Ausnehmung eingreift.

3. Schockdämpfer (2) nach einem der vorangehenden Ansprüche, **dadurch gekennzeichnet, dass** das Lagerungsteil (4) und das Fundamentteil (6) über mehrere schwingungsdämpfende Teile (20) miteinander verbunden sind.

4. Schockdämpfer (2) nach einem der vorangehenden Ansprüche, **dadurch gekennzeichnet, dass** das Lagerungsteil (4) und das Fundamentteil (6) über mehrere in Reihe nebeneinander angeordnete schwingungsdämpfende Teile (20) miteinander verbunden sind.

5. Schockdämpfer (2) nach einem der vorangehenden Ansprüche, **dadurch gekennzeichnet, dass** dieser zumindest zwei schwingungsdämpfende Teile (20) aufweist, welche in unterschiedliche Richtungen bogenförmig auskragen.

6. Schockdämpfer (2) nach einem der vorangehenden Ansprüche, **dadurch gekennzeichnet, dass** zumindest zwei schwingungsdämpfende Teile (20) einander im Wesentlichen gegenüberliegend angeordnet sind, wobei sie in entgegengesetzte Richtungen bogenförmig auskragen.

7. Schockdämpfer (2) nach einem der vorangehenden Ansprüche, **dadurch gekennzeichnet, dass** das schwingungsdämpfende Teil (20) von einem Draht aus einer Formgedächtnislegierung gebildet wird.

8. Fahrzeug, insbesondere Wasserfahrzeug, **dadurch gekennzeichnet, dass** es mindestens einen Schockdämpfer (2) nach einem der vorangehenden Ansprüche aufweist.

## Claims

1. A shock absorber (2) for the mounting of an object (10) in or on a vehicle, in particular surface vessel or underwater vehicle, with at least one foundation part (6) and with a mounting part (4) which is distanced thereto and which is connected to the foundation part (6) via at least one oscillation-damping part (20) which is formed at least partly from a shape memory material, and which extends in an arched manner from the foundation part (6) to the mounting part (4), wherein the oscillation-damping part (20) has the shape of a bow with two end sections which are aligned parallel to one another, **characterised in that** the bow comprises two limbs (24a, 24b) whose distance to one another in a region which is adjacent the two end sections aligned parallel to one another, constantly decreases amid the formation of a turning point of the limbs (24a, 24b), wherein the limbs (24a, 24b) merge into two sections which are aligned parallel to one another and which are connected to one another by an arch (22).

2. A shock absorber (2) according to claim 1, **characterised in that** in each case a recess is formed on the mounting part (4) and on the foundation part (6), wherein a first end section of the oscillation-damping part (20) engages into the recess formed on the mounting part (4), and a second end section of the oscillation-damping part (20) engages into the recess formed on the foundation part (6).

3. A shock absorber (2) according to one of the preceding claims, **characterised in that** the mounting part (4) and the foundation part (6) are connected to one another via several oscillation-damping parts (20).

4. A shock absorber (2) according to one of the preceding claims, **characterised in that** the mounting part (4) and the foundation part (6) are connected to one another via several oscillation-damping parts (20) which are arranged in a row next to one another.

5. A shock absorber (2) according to one of the preceding claims, **characterised in that** this comprises at least two oscillation-damping parts (20) which project in an arched manner in different directions.

6. A shock absorber (2) according to one of the preceding claims, **characterised in that** at least two oscillation-damping parts (20) are arranged essentially lying opposite one another, wherein they project in an arched manner in opposite directions.

7. A shock absorber (2) according to one of the preceding claims, **characterised in that** the oscillation-damping part (20) is formed by a wire of a shape memory alloy.

8. A vehicle, in particular vessel, **characterised in that** it comprises at least one shock absorber (2) according to one of the preceding claims.

## Revendications

1. Amortisseur (2) pour la suspension d'un objet (10) dans ou sur un véhicule, notamment un véhicule marin ou sous-marin, avec au moins un élément de fond (6) et un élément de suspension (4) espacé de celui-ci et relié à l'élément de fond (6) par au moins un élément amortissant (20) qui est formé au moins partiellement en un matériau à mémoire de forme et s'étend sous la forme d'un arc de l'élément de fond (6) à l'élément de suspension (4), l'élément amortissant (20) ayant la forme d'un arceau avec deux portions d'extrémités orientées parallèlement l'une à l'autre, **caractérisé en ce que** l'arceau comporte deux ailes (24a, 24b) dont la distance réciproque diminue continuellement dans une zone adjacente aux portions d'extrémités en formant un point de changement sur les ailes (24a, 24b) où les ailes (24a, 24b) font une transition vers deux portions orientées parallèlement l'une à l'autre qui sont reliées entre elles par un arceau (22).

2. Amortisseur (2) selon la revendication 1, **caractérisé en ce qu'**un évidement est formé sur l'élément de fond (4) et l'élément de suspension (6), une première partie d'extrémité de l'élément amortissant (20) s'engageant dans l'évidement formé sur l'élément de suspension (4) et une seconde partie d'extrémité de l'élément amortissant (20) s'engageant dans l'évidement formé dans l'élément de fond (6).

3. Amortisseur (2) selon l'une des revendications précédentes, **caractérisé en ce que** l'élément de suspension (4) et l'élément de fond (6) sont reliés l'un à l'autre par plusieurs éléments amortissant (20).

4. Amortisseur (2) selon l'une des revendications précédentes, **caractérisé en ce que** l'élément de suspension (4) et l'élément de fond (6) sont reliés l'un à l'autre par plusieurs éléments amortissant (20) disposés en ligne les uns à côté des autres.

5. Amortisseur (2) selon l'une des revendications précédentes, **caractérisé en ce qu'**il comprend au moins deux éléments amortissant (20) qui sont en saillie, sous la forme d'un arc, dans différentes directions.

6. Amortisseur (2) selon l'une des revendications précédentes, **caractérisé en ce qu'**au moins deux éléments amortissant (20) sont disposés essentiellement en face l'un de l'autre en étant en saillie, sous la forme d'un arc, dans différentes directions.

7. Amortisseur (2) selon l'une des revendications précédentes, **caractérisé en ce que** l'élément amortissant (20) est formé à partir d'un fil en un matériau à mémoire de forme.

8. Véhicule, notamment véhicule marin, **caractérisé en ce qu'**il comprend au moins un amortisseur (2) selon l'une des revendications précédentes.
